(19) Europäisches Patentamt / European Patent Office / Office européen des brevets

(11) **EP 3 768 431 B1**

(12) **EUROPEAN PATENT SPECIFICATION**

(45) Date of publication and mention
of the grant of the patent:
**30.04.2025  Bulletin 2025/18**

(21) Application number: **20720548.5**

(22) Date of filing: **10.02.2020**

(51) International Patent Classification (IPC):
**B02C 21/00** *(2006.01)*

(52) Cooperative Patent Classification (CPC):
**B02C 21/007;** Y02P 40/60

(86) International application number:
**PCT/TR2020/050091**

(87) International publication number:
**WO 2020/190235 (24.09.2020 Gazette 2020/39)**

(54) **A MILLING SYSTEM AND METHOD AND CERAMIC PRODUCTION METHOD RELATED THERETO**

MAHLSYSTEM UND -VERFAHREN UND ENTSPRECHENDES KERAMIKHERSTELLUNGSVERFAHREN

SYSTÉME ET PROCÉDÉ DE BROYAGE ET PROCÉDÉ DE FABRICATION DE LA CERAMIQUE ASSOCIÉ

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **21.03.2019  TR 201904225**

(43) Date of publication of application:
**27.01.2021  Bulletin 2021/04**

(73) Proprietor: **Kaleseramik Canakkale Kalebodur
Seramik
Sanayi Anonim Sirketi
Besiktas/Istanbul (TR)**

(72) Inventors:
• **ALTINTAS, Ali**
  **17430 Çanakkale (TR)**
• **KAYACI, Kagan**
  **Çanakkale (TR)**
• **TURGUT, Hatice**
  **17430 Çanakkale (TR)**
• **TASKIRAN, Mehmet Ugur**
  **17400 Çanakkale (TR)**
• **PILEVNE, Ahmet Atinç**
  **17430 Çanakkale (TR)**
• **ERGIN, Hasan**
  **17430 Çanakkale (TR)**

(56) References cited:
EP-A1- 1 690 598    WO-A1-2015/059591
CN-A- 104 258 938    FR-A- 918 556
US-A- 3 942 727

## Description

## TECHNICAL FIELD

The invention is related to a system and method related to milling solid materials.

The invention is related to a milling method and milling method used in the production of ceramic products such as tiles, in order to increase the cumulative amount of the particles of different types of raw materials having similar particle sizes and to decrease the amount of energy consumed during the process.

## PRIOR ART

During the production process of ceramic products, igredients comprising materials such as kaoline, feldspar, granite and fired tile reject are milled in order to reduce their size. The raw materials are milled such as to have sizes lower than 63 or 45 $\mu$m in accordance with the type of ceramic to be produced.

The milling process is carried out by rotating drums that are positioned horizontally and are called mills. Mill structures are usually configured as a tank having a cylindrical shape. Inside the body of the mill, balls that can freely move and are made of steel, aluminium etc. material have been provided, and generally a lining which prevents wear is used inside the inner surface of the mill.

By means of the rotation motion provided to the mill, the balls start milling the raw materials inside the body. The milling action, is carried out by two different actions provided by the balls. The balls that freely move inside the body of the mill during rotation fall onto the raw materials and create a certain amount of impact force. The balls, also move at the inner surface of the mill by means of centrifugal force and they create a friction motion by both sweeping against each other and over the raw materials. This friction motion wears down and mills the raw materials. The impact force, enables to reduce the size of larger sized parts and the wearing force continues to mill the particles that have a particle size smaller than a size for which the impact force effect is reduced.

Nowadays the milling process can be carried out using different methods. Discontinued milling, is one of the above mentioned methods. During discontinued milling, ingredients made of different types of raw materials (kaoline, feldspar, fired tile reject) and water, are filled into the mill and following this the mill is operated. The balls inside the mill, mill the raw materials by means of the above mentioned impact and abrasive force. After the milling process is completed, said mill, must be completely emptied in order to prepare it for the next production step. The discharging of the contents with this method, leads to significant amount of time loss, as in generally all discontinued systems.

In continuous milling systems, before emptying the milled components, new raw materials can be continuously added into the mill. In such structures, the mill is separated into compartments. The raw material that has been milled can be discharged without stopping the milling process.

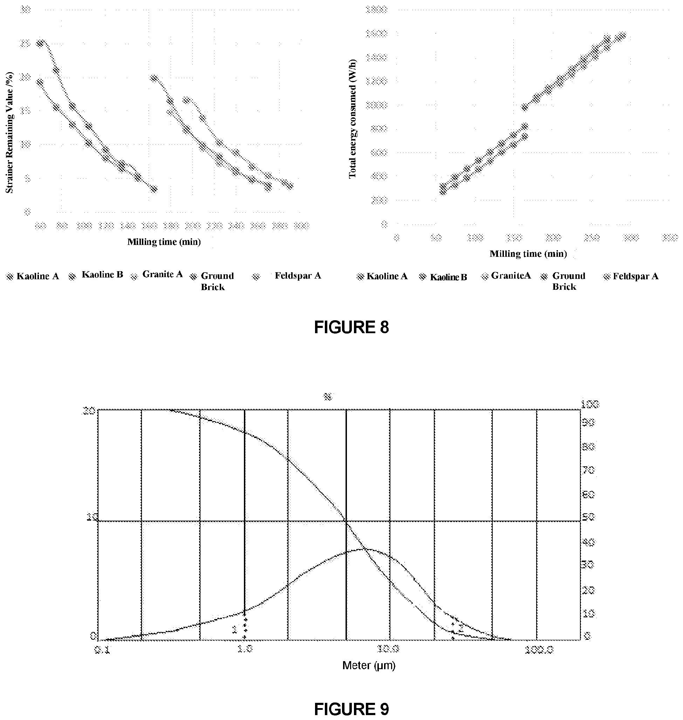

The common problem of both systems is that the mill, grinds raw materials that have different hardness and particle sizes together. Especially glazed granite raw materials in ceramic production, have different structural features. Kaoline or other similar raw materials can be reduced down to the desired particle size at the early stages of the milling process, however raw materials that are more difficult to be milled require a longer milling time in order to be reduced to a desired size. In a test carried out at a constant rotation speed in a mutual mill, the milling times of different raw materials have been determined to be as shown in Figure 8. As a result of the data obtained, all of the raw materials in the prescription, especially those that are easily milled remain in the mill for a period of time that is longer than desired, and this leads to increase in the consumed energy amount.

As a solution to reduce energy consumption, identical mills that comprise different sized balls are used. In the first mill, the ball sizes are larger, which provides more impact force, and following this, the sizes of the components that are more difficult to be milled are reduced and later on, smaller balls are used in other mills to increase abrasive force in order to obtain smaller particle sizes. Especially when ceramic, glazed granite raw material is being milled, the desired sizes (smaller than 63 or 45 $\mu$m) can be reached with at least three serially connected mills. As each mill is rotated with a separate drive element, said serial connections lead to excessive energy consumption. Similar serial structures, can be seen in the documents with the publication number WO2015059591 (A1) and EP1690598 (A1).

Besides this, in systems mentioned some materials are excessively milled while others cannot be reduced to the desired size.

A single mill and systems formed of classification elements that have been attached to the outlet of said mill in order to separate the materials that have not been able to be reduced to the desired size, are already being used in the art. In the system disclosed in the document with the publication number EP0298777 (A2) the materials that have not been able to be reduced to the desired size, are separated with a size classifier and are returned back into the mill. Some particles therefore are milled more than once and this reduces the amount of raw materials that are milled at a fixed time range.

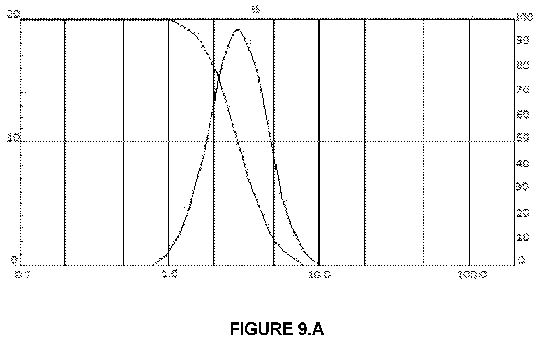

Another common problem of the systems mentioned above is that a wide range of particle size distribution is obtained following the milling process. The above mentioned methods, cause the raw materials that are easier to be milled to reach very small particle sizes. These excessively small sized raw materials cause a distribution to be created as shown in the graphic in Figure 9. Generally the raw materials components that have been milled are sintered. The ratio of the smalles particle and the largest particle for sintering is desired to be close to 1/10. However it is not possible to obtain a fixed ratio or the ratio mentioned in raw materials having distributed particle size. During sintering, if a fixed amount of energy is provided regularly, size distribution and prescriptions having different fineness following milling shall display different behaviours. The prescription having large particle size will not be able to be cooked, in other words its size will not be reduced sufficiently and the prescription having fine particle distrbution shall be overcooked, therefore the size will be reduced excessively. In such a case, size differences in the produced products are encountered and this increases the amount of waste material.

As a result all of the solutions mentioned above has made it necessary to provide a novelty in the related field.

## AIM OF THE INVENTION

The present invention aims to eliminate the problems mentioned above and to provide a technical novelty in the related field.

An aim of the invention is to provide a milling system and method and to produce ceramics using said system and method; wherein said system has been configured to increase the impact force amount in the first mill and to increase the abrasive force amount in the next mill by selecting the diameters of the serially connected mills, such that the diameter of the first mill is larger than the next mill following it, in order to reduce the amount of energy consumption and to increase the cumulative amount of the particles having similar sizes.

An aim of the invention is to provide a milling system and method and to produce ceramics using said system and method; wherein the system has been configured to supply from different supply tanks, the raw materials having different hardness degrees, starting from the hardest to the softest materials respectively, into the mill which provides the highest impact force and then towards the mill which provides the lowest impact force in order to reduce energy consumption and to increase the cumulative amount of the particles having similar sizes.

Another aim of the invention is to reduce the amount of waste ceramic materials by eliminating size differences in the final product by overcoming the problems encountered during the cooking process, by providing raw materials having similar particle sizes, following the milling process.

## BRIEF DESCRIPTION OF THE INVENTION

The present invention, as understood from the detailed description, is a wet milling system. This system is used during the production process of ceramic products and comprises raw materials with reduced particle size. Accordingly;

A wet milling system that is usable during the production process of ceramic products, which has comprising raw materials that reduced their particle size comprises

at least two continuous mills that are serially connected to each other from the mill inlets and mill outlets, that can rotate around a rotation axis, and that have been configured to transfer the milled material from one to the other according to a flow direction,

balls having an amount and size which can move freely inside the inner volume of the mills by means of the rotation of the mill around its rotation axis,

a supply tank, that is coupled to the first mill, in order to feed the material to be milled into said mill at the flow direction, and a water supply tank for converting the solid material into a suspension by providing water into the mills characterized by;

the diameter of the mill at the flow direction is larger than the diameter of another mill next at the flow direction, wherein ratio of the diameters of the continuous mill at the flow direction and another continuous mill before in the flow direction is between 0,3-0,99 and length of a continuous mill at the flow direction is shorter than the length of the next continuous mill at the flow direction.

According to a preferred embodiment of the invention another supply tank connected to another continuous mill other than the first continuous mill at the flow direction.

According to a preferred embodiment of the invention a supply tank connected to each continuous mill.

According to a preferred embodiment of the invention a hydrocyclone connected to the last continuous mill outlet at the flow direction, where one end is connected to feed any of the continuous mills and the other end is connected to discharge the milled material that has been separated/classified according to size.

According to a preferred embodiment of the invention a dewatering unit, where one end is connected to resupply the water that has been recovered to the water supply tank and the other end is connected to discharge the milled material from the mill in order to increase the solid rate of the suspension whose density has been reduced so as to perform classification according to size in the hydrocyclone.

According to a preferred embodiment of the invention, a dewatering unit is provided, where one end is connected to resupply the water that has been recovered to the water supply tank, and the other end is connected to discharge the milled material from the mill in order to increase the solid rate of the suspension, whose density has been reduced so as to perform classification according to size in the hydrocyclone.

The present invention mentioned above which has been provided to reach the aims that can be construed from the detailed description is a wet milling method.; a solid material and water supplied to a milling system from a supply tank and water supply tank, which converts the solid material into a suspension by providing water is milled with;

at least two continuous mills that are serially connected to each other from the mill inlets and mill outlets, that can rotate around a rotation axis, and that have been configured to transfer the milled material from one to the other according to a flow direction, and balls having an amount and size which can move freely inside the inner volume of the mills by means of the rotation of the mill around its rotation axis,
wherein the diameter of the mill in the flow direction is larger than the diameter of another mill next in the flow direction. And wherein ratio of the diameters of the continuous mill at the flow direction and another continuous mill before in the flow direction is between 0,3-0,99. And wherein length of a continuous mill at the flow direction is shorter than the length of the next continuous mill at the flow direction.

According to a preferred embodiment of the invention another supply tank is used to supply another continuous mill other than first continuous mill at the flow direction.

According to a preferred embodiment of the invention each continuous mill is supplied with a supply tank.

According to a preferred embodiment of the invention solid material having different hardness degrees are supplied to the system from each said supply tank.

According to a preferred embodiment of the invention a hydrocyclone is used in order to select size of the milled material, which is connected to the last continuous mill outlet at the flow direction, where one end is connected to feed any of the continuous mill and the other end is connected to discharge the milled material that has been separated/classified.

According to a preferred embodiment of the invention, a dewatering unit is used for separating solid material from water, where one end is connected to resupply the recovered water to the water supply tank, and the other end is connected to discharge the milled material in order to increase the solid rate of the suspension, whose density has been reduced to perform size classification by the hydrocyclone.

According to a preferred embodiment of the invention, the process comprises the following steps: milling an aqueous solution prepared with a ceramic formulation according to the method in claims 6-11, shaping the milled material, and sintering the shaped material.

## DESCRIPTION OF THE FIGURES

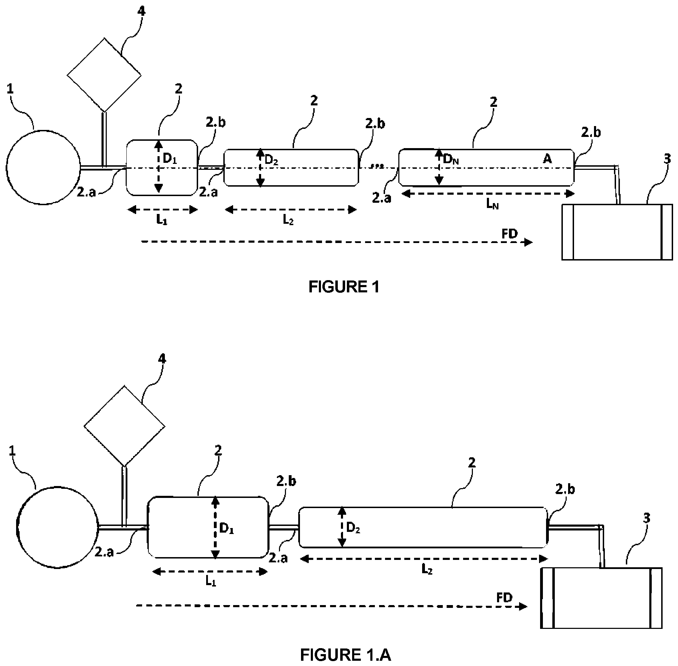

In Figure 1, a block view of an embodiment of the milling system subject to the invention has been provided. In the figure a plurality of mill usage has been shown.

In Figure 1.A, a block view of another embodiment of the milling system subject to the invention has been provided. In the figure a dual mill usage has been shown.

In Figure 2, a block view of another embodiment of the milling system subject to the invention has been provided. The usage and connection method of the hydrocyclone according to the structure of the invention have been shown.

In Figure 3, a block view of another embodiment of the milling system subject to the invention has been provided. The usage and connection method of the dewatering unit according to the structure of the invention have been shown.

In Figure 4, a schematic view of an embodiment of the milling system subject to the invention has been provided.

In Figure 5, a block view of an embodiment of the milling system subject to the invention has been provided. The usage and connection methods of the supply tanks that have been assigned for raw material groups that display different milling resistances have been shown in the Figure.

In Figure 6 a schematic view of an embodiment of the milling system subject to the invention has been provided.

In Figure 7 a schematic view of an embodiment of the milling system subject to the invention has been provided. The usage and connection methods of different types of mills have been shown in the Figure.

In Figure 8, the comparative graphs of the milling times of materials in the same mill, having different hardness degrees and energy consumed during said milling process has been provided.

In Figure 9, the particle size distribution of a ceramic prescription milled with the prior art has been shown.

In Figure 9.A, the particle size distribution of the ceramic prescription used in Figure 9 and milled with the system subject to the invention has been shown.

## DESCRIPTION OF THE REFERENCE NUMBERS IN THE FIGURES

    **1.** Supply tank

    **2.** Mill

        **2.a.** Mill inlet

        **2.b.** Mill outlet

    **3.** Collection tank

    **4.** Water supply tank

    **5.** Hydrocyclone

    **6.** Dewatering unit

    **7.** Mixing tank

    **8.** Density adjustment tank

    **9.** Balance tank

    **10.** Eccentric mill

    **11.** Vertical Mill

    **12.** Vibrating screen

    **13.** Pump

    $D_1$. First mill diameter

    $D_2$. Second mill diameter

    $D_N$. N. mill diameter

    $L_1$. First mill length

    $L_2$. Second mill length

        $L_N$. N. mill length

        **A.** Rotation axis

        **B.** Balls

        **FD.** Flow direction

## DETAILED DESCRIPTION OF THE INVENTION

In this detailed description, the milling system and method subject to the invention and the ceramic production method related thereto have been described with non-limiting illustrations in order to better explain the subject matter.

The subject matter of the invention, is related to a system and method for milling solid materials. In Figure 1, a block view of an embodiment of the milling system subject to the invention has been provided.

The invention is a milling system system characterized in that;

it comprises at least two continuous mills (2) that are serially connected to each other from the mill inlets (2.a) and mill outlets (2.b), that can rotate around a rotation axis (A), and that have been configured to transfer the milled material from one to the other according to a flow direction (FD),

balls (B)having an amount and size which can move freely inside the inner volume of the mills (2) by means of the rotation of the mill (2) around its rotation axis (A),

a supply tank (1), that is coupled to the first mill, in order to feed the material to be milled into said mill (2) at the flow direction (FD) and

wherein the diameter of the mill (2) in the flow direction (FD) is larger than the diameter of another mill (2) next in the flow direction (FD).

Although the system can preferably comprise two continuous mills (2) as shown in Figure 1. A-7, it can also comprise more than two continuous mills (2) as shown in Figure 1, within the scope of the limitations provided in Claim 1. This detailed description shall continue by disclosing a system comprising two continuous mills (2).

The term "Flow direction" (FD) describes the direction of motion of the milled material exiting out of the supply tank (1) and moving towards said continuous mills (2).

By referring to Figure 1.A the system subject to the invention comprises a supply tank (1). The supply tank (1) is preferably in the form of a silo, and it contains the solid material or material groups that are required to be milled. Said supply tank (1) has been configured to be coupled to the continuous mill (2) in order to transfer the solid material that is desired to be milled.

Preferably the system comprises a water supply tank (4) used to convert the solid material primarily into a suspension by providing water to the supply tank (1) directly or by means of said coupling.

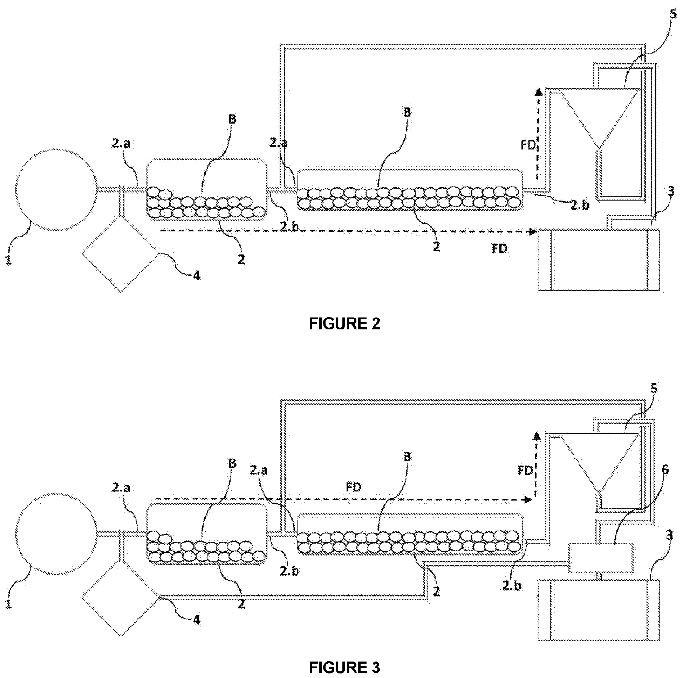

Said continuous mills (2) have been serially coupled to each other. Continuous mills (2) have a cylindrical body ve balls (B) inside said body as shown in Figure 2. It should be assumed that all of the mills in the Figures comprise the balls (B) as shown in Figure 2. The balls (B) are preferably made of a resilient material such as steel or aluminium.

A rotational motion around a rotation axis (A) is provided to the continuous mills (2) by means of a drive element (has been shown in the figures). Preferably each continuous mill (2) is rotated by a drive element. It is obvious for the person skilled in the art that the continuous mills (2) can be rotated by a mutual drive element.

Some of the balls (B) mentioned above move towards the periphery of the continuous mill (2), by means of the rotation of the continuous mills (2) and the balls accumulate within a certain movement and provide abrasive force among themselves and some of the balls (B) also scatter inside the inner volume of the continuous mill (2) and they fall down to create impact force.

When referring to Figure 1 ve 1.A; the diameter of the first continuous mill (2) connected directly to the supply tank (1) is defined as $D_1$, the diameter of the second continuous mill (2) connected to the first continuous mill (2) is defined as $D_2$ and the diameter of the n'th mill (2) has been defined as $D_N$. As the mentioned $D_1$ and $D_2$ radiuses increase, it has been noted that the impact force is also increased and the abrasive force is reduced. However it has been noted that when the radiuses decreased, the impact force is reduced and the abrasive force is increased. The mill diameters have been selected as below, as the particle size can be reduced to a certain degree by consuming rapid and low energy by means of the impact force of the large sized particles and as the abrasive force under a certain particle size is more efficient to reduce the size of the particle.

$$D_1 > D_2$$

Accordingly the large particle sized material transferred to the first continuous mill (2) from the supply tank (1) is subjected to higher impact force in the first continuous mill (2) in comparison to the second continuous mill (2) and therefore its size is reduced below a certain particle size, and it's size is brought to suitable sizes by being milled with abrasive force and following this it is subjected to higher abrasive force in the second continuous mill (2) in comparison to the first continuous mill (2) in order for the material to be milled to the desired particle size. In this system correct milling forces are used (impact and abrasion) for correct sizes and as a result it has been determined that said milling system consumed 35% less energy in comparison to the classic systems that is used for the same operation.

It has been suprisingly noted that as shown in Figure 9.A, the particle size distribution of the material that is milled in said system, is more orderly in comparison to the particle size distribution of the materials milled in known systems shown in Figure 9 and that the particle sizes that have been obtained with said system have been obtained with sizes that are very similar to each other.

The ratio of the diameter $D_2$ of the second continuous mill (2) to the diameter $D_1$ of the first continuous mill (2) is provided to be between 0,3-0,99. According to a preferred embodiment the mentioned ratio has been realized as 0,77.

The length of the first continuous mill (2) connected directly to the supply tank (1) is defined as $L_1$, the length of the second continuous mill (2) connected to the first continuous mill (2) is defined as $L_2$ and the length of the n'th mill (2) has been defined as $L_N$. Preferably it has been selected to be as follows.

$$L_2 > L_1$$

The length/diameter ratio of said first continuous mill (2) can be selected to be between 0,8-2 and the length/diameter ratio of the second continuous mill (2) can be selected to be between 2-10.

In Figure 2, a block view of an embodiment of the system subject to the invention has been provided. A hydrocyclone (5) has been connected to the outlet (2.b) of the last serially connected continuous mill (2). The material that is milled is transferred to the hydrocyclone (5). By means of the vortex effect provided by the hydrocyclone (5), the particles that have reached the desired particle size followig the milling process are directed towards the outlet of the milling system and into the collection tank (3). As it can be seen in Figure 2, the other outlet of the hydrocyclone (5) has been connected such that it returns back to the milling system. The particles having a size such that they can overcome the vortex effect of the hydrocyclone (5) are supplied from this outlet to preferably a second continuous mill (1) and the particles that have reached a suitable size after milling are supplied to the collection tank (3) from the other outlet. Preferably Krebs gMax® hydrocyclones (5) are used in the milling system.

In Figure 3, the usage of a dewatering unit (6) in said milling system is illustrated. The material that is milled in the wet milling process are reduced in terms of density before being supplied to the hydrocyclone (5). The solid ratio of the low density suspension that has reached the desired size is increased by the dewatering unit (6). During optimal usage the outlet of the hydrocyclone (5) through which the suitable sized particles are discharged is connected to the inlet of the dewatering unit (6). Here, the solid content of the suspension is increased and the the suspension whose solid content has been increased is transferred from the outlet of the dewatering unit (6) into the collection tank (3). The other outlet of the dewatering unit (6) is preferably coupled to the water supply tank (4) or is coupled out of the system.

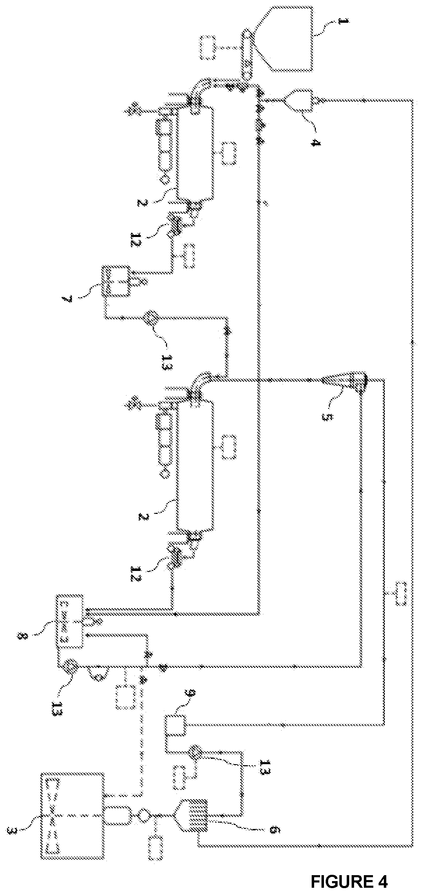

In Figure 4, a schematic view of an embodiment of the milling system subject to the invention has been provided. The supply tank (1) is connected to the first continuous mill (2). To one end of said connection a water supply tank (4) has been connected. The water supply tank (4) supplied a suitable amount of water to the material that is to be milled. The material that is to be milled and which has been supplied with water is milled in the first continuous mill (2). An vibrating screen (12) has been positioned at the outlet (2.b) of the first continuous mill (2).

The vibrating screen (12) separates the material parts that have not been reduced to the desired size. The vibrating screen (12) is connected to a mixing tank (7) and the partially milled material in the mixing tank (7) is transferred into the second continuous mill (2) by means of a pump (13). Another vibrating screen (12) has been positioned at the outlet (2.b) of the second continuous mill (2). The material milled in the second continuous mill (2) is transferred to a density adjustment tank (8) that is connected to said mill (2). The density adjustment tank (8) is also connected to a water supply tank (4). The density of the milled material that is milled with the water supplied from the water supply tank (4) is reduced. A pump (13) provided at the outlet of the density adjustment tank (8) transfers the milled material into the hydrocyclone (5). The suitable particle sized materials in the hydrocyclone (5) are transferred to the dewatering unit (6) that is connected to the hydrocyclone (5) and the unsuitable sized materials are transferred to the second continuous mill (2) that is connected again to the hydrocyclone (5). The outlet of the dewatering unit (6) is directly connected to the collection tank (3).

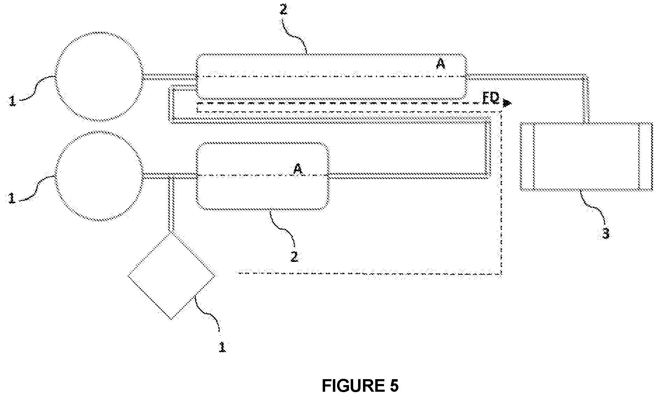

In Figure 5, a block view of a milling system having a dual supply tank (1) has been provided. Here, if the number of continuous mills (2) increase, the number of supply tanks (1) also increase. The second continuous mill (2) is connected to a second supply tank (1) besides a first continuous mill (2). Here, the supply tank (1) that is connected to the first continuous mill (2) is used to accomodate materials that require higher impact force in order to be milled. The other supply tank (1) that is connected to the second continuous mill (2) is used to accomodate materials that require higher absrasive force in order to be milled. In this embodiment, the outlet of the first continuous mill (2.b) is again connected to the inlet (2.a) of the second continuous mill. As it has been described in the embodiments illustrated in Figures 2-4, the hydrocyclone (5) and the dewatering unit (6) can also be used in said embodiment.

The embodiment in Figure 5, can be configured to increase the number of the supply tanks (1) of the mills (2) and that are connected to said mills (2). Wherein, mills (2) having the suitable diameters and/or lengths for each raw material input and supply tanks (1) connected to said mills (2) can be provided.

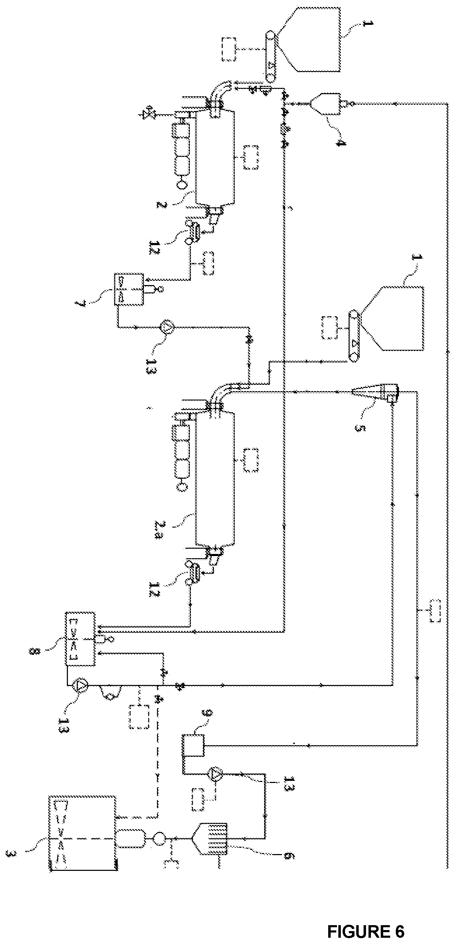

In Figure 6, the dual supply tank (1) illustrated in Figure 5, has been given schematically. This structure that is mentioned comprises another supply tank (1) different to the description of Figure 4, provided above. Said second supply tank (1), has been connected to the inlet (2.a) of the second continuous mill (2) in order to provide non-milled materials.

The milling system subject to the invention may additionally comprise an eccentric mill (10). Eccentric mills (10) are not restricted to move around a single rotation axis such as in cylindrical formed mills (2), and therefore they can provide much higher impact force in comparison to the cylindrical shaped mills (2).

Besides that, the milling system may comprises a vertical mill (11), preferably a vertical mixing mill (11). The vertical mill (11) can comprise can comprise a mill that has a housing positioned vertically and protrusions that move rotationally at the centre of said housing. A large section of the inside of the housing is filled with balls (B), wherein said mill continuously moves the other said mills. The motion of the balls (B) mills the material entering the vertical mill by means of abrasive force. Pumps (13) have been attached to the inlet and outlet of the vertical mill (11) in order to provide motion to the material to be milled.

The vertical mill (11) and the eccentric mill (10) can not only be used together in a milling system but they can also be used separately.

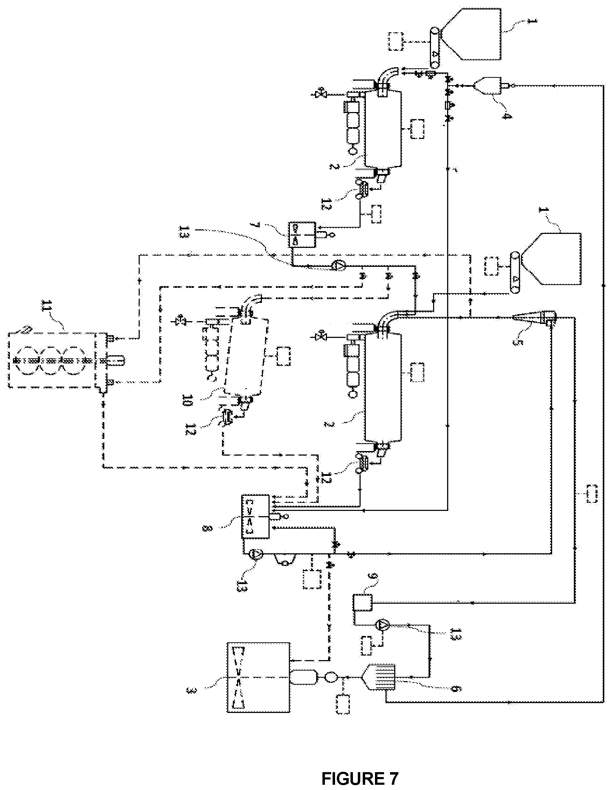

In Figure 7, the connection of said vertical mill (11) and eccentric mill (10) on the milling system is shown. As opposed to Figure 4 and 6, Figure 7 comprises an eccentric mill (10) connected to the outlet of the mixing tank (7) and a vertical mill (11). The outlets of the vertical mill (11) and eccentric mill (10) are coupled to the density adjustment tank (8). Besides this, another inlet of the vertical mill (11), can be connected to the outlet of the hydrocyclone (5) out of which the materials that have not been sufficiently milled are discharged.

The invention is a milling method characterized in that; a solid material supplied to a milling system from a supply tank (1) is milled with;

at least two continuous mills (2) that are serially connected to each other from the mill inlets (2a) and mill outlets (2.b), that can rotate around a rotation axis (A), and that have been configured to transfer the milled material from one to the other according to a flow direction (FD), and balls (B)having an amount and size which can move freely inside the inner volume of the mills (2) by means of the rotation of the mill (2) around its rotation axis (A), wherein the diameter of the mill (2) at the flow direction (FD) is selected such that the diameter of the first mill relative to the next mill (2) in the flow direction (FD) is larger.

The method subject to the invention is related to milling the material(s) that are to be milled in continuous mills (2) wherein each diameter of the mill before it is larger and each diameter of the mill after it is smaller. By means of being able to select the diameter size, in the first mill (2) the impact force of the balls (B) in comparison to the second mill (2) is higher and in the second mill (2) the abrasive force of the balls (B) in comparison to the first mill is higher.

Accordingly, the materials located inside the supply tank (1), that have larger diameters or have a certain hardness degree are milled inside a mill (2) having a larger diameter (in comparison to the second mill (2)) which provides higher impact force and which provides higher milling efficiency for said materials, and following this, the partially milled material, is reduced to a size that can be more efficiently milled with abrasive force. Following this the partially milled material is milled in a mill (2) having a smaller diameter (according to the first mill (2)) but which provides higher abrasive force and higher milling efficiency.

Said milling process can be provided by means of the wet milling method by supplying water from the water supply tank (4), to the material(s) before the first mill (2).

The ratio of the diameter of the second mill to the first mill of said serially connected mills can be selected to be between 0,3-0,99.

According to a preferred emnodiment, the length of the first mill (2) is selected to be shorter than the next mill (2).

In an embodiment of the invention, feeding can be provided from a plurality of supply tanks (1). The components or components groups of the formula desired to be milled preferably are transferred from different supply tanks (1) to mills (2). The components or component groups, are determined acording to hardness or particle sizes.

Each component or component group is transferred to the mill (2) that is suitable in terms of hardness or particle size. For example, while a component and component group having larger particle sizes, are transferred to a larger diameter mill (2) to allow them to be subjected to a higher impact force, whereas a component or component group having a smaller particle size are transferred to a smaller diameter mill (2) in order to allow them to be subjected to higher abrasive force.

According to a preferred embodiment of the invention, size selection is carried out by a hydrocyclone (5) connected to the last continuous mill outlet (2.b) at the flow direction (FD), wherein one end is connected to refeed any of the continuous mills (2) and the other end is connected to the mill in order to discharge the milled material that has been classified according to size. In said embodiment the hydrocyclone (5) is again preferably connected to the last mill (2). The larger particle sized materials that are separated from the hydrocyclone (5) are fed to any mill (2) preferably the last mill (2).

According to another preferred embodiment of the invention, the solid rate of the suspension is increased by means of the dewatering unit (6), wherein one end is connected to resupply the water that has been recovered to the water supply tank (4) and the other end is connected to discharge the milled material in order to increase the solid rate of the suspendion whose density has been reduced so as to perform classification according to size in the hydrocyclone (5).

The invention is a milling system characterized by comprising the steps of;

> milling the suspension prepared with a ceramic prescription according to a method of any of the claims 6-11,

shaping of the milled material,
sintering of the shaped material.

Ceramic is obtained from a prescription that constitutes materials such as feldspar, kaoline, granite, fired tile reject etc. Other various components can also be used in ceramic production besides the above mentioned components. Said components and the ratios of said components is obvious to the person skilled in the art.

In the method subject to the invention the milled prescription obtained is shaped, preferably pressed and brought to desired firmness and is cooked after being shaped, and particle bonding is achieved by means of sintering of the liquid phase. These steps and the details of these steps are again well known by the person skilled in the art.

In an embodiment of the invention, feeding can be provided from a plurality of supply tanks (1). The components or components groups of the formula desired to be milled preferably are transferred from different supply tanks (1) to mills (2). The components or component groups, are determined acording to hardness or particle sizes. As it has been shown in Figure 8, kaoline A, B; can be rapidly milled in comparison to granite A, feldspar A and fired tile reject. According to a method, kaoline can form a group and granite, feldspar and fired tile reject can form another group. Granite, feldspar and fired tile reject are milled in a larger diameter mill (2) and then they are transferred to a smaller diameter sized mill (2), whereas kaoline can be directly fed into a smaller diameter sized mill (2).

Besides this, each component can be transferred with a suitable order from a separate supply tank (1) to a mill (2) having a suitable diameter according to the selection option described above.

Another subject matter which this application claims protection is the ceramic product obtained with said ceramic production method and the intermediate product that is obtained when said method is applied to produce the ceramic product. Said product can be a tile or it can be derived with known derivations besides being a tile within the protection scope of this invention. It has been described that the particle size distribution of the mixture obtained by means of the milling method used in said method is firmer, and that the cumulative amount of the particles having sizes similar to each other was higher and this result has been shown in the comparison of Figures 9-9.A. It can therefore be seen that the product that is obtained as a result of this cooking process, shall be advantegous in comparison to the known ceramic products in terms of various physical values.

The protection scope of the invention has been defined in the attached claims and the invention cannot be limited to the illustrative embodiments mentioned in the brief and detailed description. It is obvious that a person skilled in the art can convey similar embodiments under the light of the descriptions made above without deviating from the main scope of the invention.

## Claims

1. A wet milling system that is usable during the production process of ceramic products, which has comprising raw materials that reduced their particle size comprises

   at least two continuous mills (2) that are serially connected to each other from the mill inlets (2.a) and mill outlets (2.b), that can rotate around a rotation axis (A), and that have been configured to transfer the milled material from one to the other according to a flow direction (FD),
   balls (B) having an amount and size which can move freely inside the inner volume of the mills (2) by means of the rotation of the mill (2) around its rotation axis (A),
   a supply tank (1), that is coupled to the first mill, in order to feed the material to be milled into said mill (2) at the flow direction (FD), and a water supply tank (4) for converting the solid material into a suspension by providing water into the mills (2) *characterized* in that
   the diameter of the mill (2) at the flow direction (FD) is larger than the diameter of another mill (2) next at the flow direction (FD), wherein ratio of the diameters of the continuous mill (2) at the flow direction (FD) and another continuous mill (2) before in the flow direction (FD) is between 0,3-0,99 and the length of a continuous mill (2) at the flow direction (FD) is shorter than the length of the next continuous mill (2) at the flow direction (FD).

2. A system according to claim *1, characterized by* comprising another supply tank (1) connected to another continuous mill (2) other than the first continuous mill (2) at the flow direction (FD).

3. A system according to claim 2, *characterized by* comprising a supply tank (1) connected to each continuous mill (2).

4. A system according to claim *1, characterized by* comprising a hydrocyclone (5) connected to the last continuous mill outlet (2.b) at the flow direction (FD), where one end is connected to feed any of the continuous mills (2) and the other end is connected to discharge the milled material that has been separated/classified according to size.

5. A system according to claim 4, *characterized by* comprising a dewatering unit (6), arranged downstream said other end of the hydrocyclone (5), where one end is connected to resupply the water that has been recovered to the water supply tank (4) and the other end is connected to discharge the milled material from the mill (2) in order to increase the solid rate of the suspension whose density has been reduced so as to perform classification according to size in the hydrocyclone (5).

6. A wet milling method wherein a solid material and water supplied to a milling system from a supply tank (1) and a water supply tank (4), which converts the solid material into a suspension by providing water is milled with at least two continuous mills (2) that are serially connected to each other from the mill inlets (2.a) and mill outlets (2.b), that can rotate around a rotation axis (A), and that have been configured to transfer the milled material from one to the other according to a flow direction (FD), and balls (B) having an amount and size which can move freely inside the inner volume of the mills (2) by means of the rotation of the mill (2) around its rotation axis (A), wherein the diameter of the mill (2) in the flow direction (FD) is larger than the diameter of another mill (2) next in the flow direction (FD). And wherein ratio of the diameters of the continuous mill (2) at the flow direction (FD) and another continuous mill (2) before in the flow direction (FD) is between 0,3-0,99. And wherein length of a continuous mill (2) at the flow direction (FD) is shorter than the length of the next continuous mill (2) at the flow direction (FD).

7. A wet milling method according to claim 6, wherein another supply tank (1) is used to supply another continuous mill (2) other than first continuous mill (2) at the flow direction (FD).

8. A wet milling method according to claim 7, wherein each continuous mill (2) is supplied with a supply tank (1).

9. A wet milling method according to claim 8, wherein solid materials having different hardness degrees are supplied to the system from each said supply tank (1).

10. A wet milling method according to claim 6, wherein a hydrocyclone (5) is used in order to select size of the milled material, which is connected to the last continuous mill outlet (2.b) at the flow direction (FD), where one end is connected to feed any of the continuous mill (2) and the other end is connected to discharge the milled material that has been separated/classified.

11. A wet milling method according to claim 10, wherein a dewatering unit (6) is arranged downstream said other end of the hydrocyclone (5), for separating solid material from water where one end is connected to resupply the water that has been recovered to the water supply tank (4) and the other end is connected to discharge the milled material in order to increase the solid rate of the suspension whose density has been reduced so as to perform classification according to size by the hydrocyclone (5).

12. A ceramic production method comprising the steps of:

milling of an aqueous solution prepared with a ceramic prescription according to a method of claims 6-11,
shaping of the milled material,
sintering of the shaped material.


**Patentansprüche**

1. Ein Nassmahlsystem, das während des Herstellungsprozesses von keramischen Produkten verwendet werden kann, die Rohstoffe enthalten, die ihre Teilchengröße reduziert haben, umfasst

mindestens zwei kontinuierliche Mühlen (2), die von den Mühleneinlässen (2.a) und den Mühlenauslässen (2.b) aus in Reihe miteinander verbunden sind, die um eine Rotationsachse (A) rotieren können und die so konfiguriert sind, dass sie das gemahlene Material entsprechend einer Strömungsrichtung (FD) von einer zur anderen überführen,
Kugeln (B) mit einer Menge und Größe, die sich durch die Drehung der Mühle (2) um ihre Drehachse (A) frei im Innenvolumen der Mühlen (2) bewegen können,
einen Zuführtank (1), der mit der ersten Mühle gekoppelt ist, um das zu mahlende Material in der Strömungsrichtung (FD) in die genannte Mühle (2) einzuspeisen, und einen Wasserzuführtank (4) zum Umwandeln des Feststoffs in eine Suspension durch Zuführen von Wasser in die Mühlen (2), *dadurch gekennzeichnet, dass*
der Durchmesser der Mühle (2) in der Strömungsrichtung (FD) größer ist als der Durchmesser einer anderen Mühle (2), die in der Strömungsrichtung (FD) am nächsten ist, wobei das Verhältnis der Durchmesser der kontinuierlichen Mühle (2) in der Strömungsrichtung (FD) und einer anderen kontinuierlichen Mühle (2) davor in der Strömungsrichtung (FD) zwischen 0,3-0,99 liegt und die Länge einer kontinuierlichen Mühle (2) in der Strömungsrichtung (FD) kürzer ist als die Länge der nächsten kontinuierlichen Mühle (2) in der Strömungsrichtung (FD).

2. System nach Anspruch 1, *dadurch gekennzeichnet, dass* es einen weiteren Zuführtank (1) umfasst, der mit einer anderen kontinuierlichen Mühle (2) als der ersten kontinuierlichen Mühle (2) in der Strömungsrichtung (FD) verbunden ist.

3. System nach Anspruch 2, *dadurch gekennzeichnet, dass* es einen Zuführtank (1) umfasst, der mit jeder kontinuierlichen Mühle (2) verbunden ist.

4. System nach Anspruch 1, *dadurch gekennzeichnet, dass* es einen Hydrozyklon (5) umfasst, der mit dem letzten kontinuierlichen Mühlenauslass (2.b) in Strömungsrichtung (FD) verbunden ist, wobei ein Ende zur Beschickung einer der kontinuierlichen Mühlen (2) und das andere Ende zum Austragen des gemahlenen Materials, das nach der Größe getrennt/klassifiziert wurde, verbunden ist.

5. System nach Anspruch 4, *dadurch gekennzeichnet, dass* es eine Entwässerungseinheit (6) umfasst, die stromabwärts des genannten anderen Endes des Hydrozyklons (5) angeordnet ist, wobei ein Ende angeschlossen ist, um das zurückgewonnene Wasser wieder in den Wasserzuführtank (4) zu führen, und das andere Ende verbunden ist, um das gemahlene Material aus der Mühle (2) auszutragen, um die Festrate der Suspension zu erhöhen, deren Dichte reduziert wurde, um eine Klassifizierung nach Größe im Hydrozyklon (5) zu realisieren.

6. Nassmahlverfahren, wobei ein Feststoff und Wasser, die einem Mahlsystem aus einem Zuführtank (1) und einem Wasserzuführtank (4) zugeführt werden, das den Feststoff durch Bereitstellung von Wasser in eine Suspension umwandelt, mit mindestens zwei kontinuierlichen Mühlen (2) gemahlen wird, die von den Mühleneinlässen (2.a) und Mühlenauslässen (2.b) aus in Reihe miteinander verbunden sind, die um eine Rotationsachse (A) rotieren können und die so konfiguriert sind, dass sie das gemahlene Material von einer zur anderen gemäß einer Strömungsrichtung (FD) übertragen, und Kugeln (B), die eine Menge und Größe haben, die sich innerhalb des Innenvolumens der Mühlen (2) mittels der Rotation der Mühle (2) um ihre Rotationsachse (A) frei bewegen können,
wobei der Durchmesser der Mühle (2) in Strömungsrichtung (FD) größer ist als der Durchmesser einer anderen, in Strömungsrichtung (FD) nächsten Mühle (2). Und wobei das Verhältnis der Durchmesser der kontinuierlichen Mühle (2) in Strömungsrichtung (FD) und einer anderen kontinuierlichen Mühle (2) davor in Strömungsrichtung (FD) zwischen 0,3-0,99 liegt. Und wobei die Länge einer kontinuierlichen Mühle (2) in der Strömungsrichtung (FD) kürzer ist als die Länge der nächsten kontinuierlichen Mühle (2) in der Strömungsrichtung (FD).

7. Nassmahlverfahren nach Anspruch 6, wobei ein anderer Zuführtank (1) verwendet wird, um eine andere kontinuierliche Mühle (2) als die erste kontinuierliche Mühle (2) in der Strömungsrichtung (FD) zu versorgen.

**8.** Nassmahlverfahren nach Anspruch 7, wobei jede kontinuierliche Mühle (2) mit einem Zuführtank (1) zugeführt wird.

**9.** Nassmahlverfahren nach Anspruch 8, wobei aus jedem Zuführtank (1) Feststoffe mit unterschiedlichen Härtegraden dem System zugeführt werden.

**10.** Nassmahlverfahren nach Anspruch 6, wobei ein Hydrozyklon (5) verwendet wird, um die Größe des gemahlenen Materials zu selektieren, der mit dem letzten kontinuierlichen Mühlenauslass (2.b) in der Strömungsrichtung (FD) verbunden ist, wobei ein Ende mit der Zufuhr einer beliebigen kontinuierlichen Mühle (2) und das andere Ende zum Austragen des gemahlenen Materials, das getrennt/klassifiziert wurde, verbunden ist.

**11.** Nassmahlverfahren nach Anspruch 10, wobei eine Entwässerungseinheit (6) stromabwärts des genannten anderen Endes des Hydrozyklons (5) angeordnet ist, um Feststoffe vom Wasser zu trennen, wobei ein Ende verbunden ist, um das zurückgewonnene Wasser wieder in den Wasserzuführtank (4) zu führen, und das andere Ende verbunden ist, um das gemahlene Material auszutragen, um die Festrate der Suspension zu erhöhen, deren Dichte reduziert wurde, um eine Klassifizierung nach Größe durch den Hydrozyklon (5) durchzuführen.

**12.** Verfahren zur Herstellung von Keramik, das die folgenden Schritte umfasst:

> Mahlen einer wässrigen Lösung, die mit einer keramischen Rezeptur nach einem Verfahren der Ansprüche 6-11 hergestellt wurde,
> Formen des gemahlenen Materials,
> Sintern des geformten Materials.

**Revendications**

**1.** Un système de broyage humide utilisable pendant le processus de production de produits céramiques, qui comprend des matières premières qui réduisent la taille de leurs particules, comprend

> au moins deux broyeurs continus (2) connectés en série l'un à l'autre par les entrées (2.a) du broyeur et les sorties (2.b) du broyeur, qui peuvent tourner autour d'un axe de rotation (A) et qui ont été configurés pour transférer le matériau broyé de l'un à l'autre en fonction d'une direction d'écoulement (FD),
> des billes (B) ayant une quantité et une taille qui peuvent se déplacer librement dans le volume intérieur des broyeurs (2) au moyen de la rotation du broyeur (2) autour de son axe de rotation (A),
> un réservoir d'alimentation (1), qui est couplé au premier broyeur, afin d'alimenter le matériau à broyer dans ledit broyeur (2) dans la direction d'écoulement (FD), et un réservoir d'alimentation en eau (4) pour convertir le matériau solide en une suspension en fournissant de l'eau dans les broyeurs (2), *caractérisé en ce que* le diamètre du broyeur (2) dans la direction d'écoulement (FD) est plus grand que le diamètre d'un autre broyeur (2) dans la direction d'écoulement (FD), dans lequel le rapport des diamètres du broyeur continu (2) dans la direction d'écoulement (FD) et d'un autre broyeur continu (2) dans la direction d'écoulement (FD) est compris entre 0,3-0,99 et la longueur d'un broyeur continu (2) dans la direction d'écoulement (FD) est plus courte que la longueur du broyeur continu suivant (2) dans la direction d'écoulement (FD).

**2.** Un système selon la revendication 1, *caractérisé par* la présence d'un autre réservoir d'alimentation (1) connecté à un autre broyeur continu (2) autre que le premier broyeur continu (2) au niveau de la direction d'écoulement (FD).

**3.** Un système selon la revendication 2, *caractérisé par* la présence d'un réservoir d'alimentation (1) connecté à chaque broyeur continu (2).

**4.** Un système selon la revendication 1, *caractérisé par* la présence d'un hydrocyclone (5) connecté à la dernière sortie (2.b) du broyeur continu dans la direction d'écoulement (FD), où une extrémité est connectée pour alimenter n'importe lequel des broyeurs continus (2) et l'autre extrémité est connectée pour décharger le matériau broyé qui a été séparé/classé en fonction de sa taille.

**5.** Un système selon la revendication 4, *caractérisé par le fait qu'*il comprend une unité de déshydratation (6), disposée en aval de ladite autre extrémité de l'hydrocyclone (5), où une extrémité est connectée pour réalimenter le réservoir d'alimentation en eau (4) avec l'eau qui a été récupérée et l'autre extrémité est connectée pour décharger le matériau broyé du broyeur (2) afin d'augmenter le taux de solides de la suspension dont la densité a été réduite pour effectuer une classification selon la taille dans l'hydrocyclone (5).

**6.** Une méthode de broyage humide dans laquelle un matériau solide et de l'eau fournis à un système de broyage à partir d'un réservoir d'alimentation (1) et d'un réservoir d'alimentation en eau (4), qui convertit le matériau solide en une suspension en fournissant de l'eau, sont broyés avec au moins deux broyeurs continus (2) qui sont connectés en série l'un à l'autre à partir des entrées (2.a) du broyeur et des sorties (2.b) du broyeur, qui peuvent tourner autour d'un axe de rotation (A), et qui ont été configurés pour transférer le matériau broyé de l'un à l'autre selon une direction d'écoulement (FD), et des billes (B) ayant une quantité et une taille qui peuvent se déplacer librement dans le volume intérieur des broyeurs (2) au moyen de la rotation du broyeur (2) autour de son axe de rotation (A),

dans lequel le diamètre du broyeur (2) dans la direction d'écoulement (FD) est plus grand que le diamètre d'un autre broyeur (2) situé dans la direction d'écoulement (FD). Et dans lequel le rapport des diamètres du broyeur continu (2) dans la direction d'écoulement (FD) et d'un autre broyeur continu (2) avant dans la direction d'écoulement (FD) est compris entre 0,3-0,99. Et dans lequel la longueur d'un broyeur continu (2) dans la direction d'écoulement (FD) est plus courte que la longueur du broyeur continu suivant (2) dans la direction d'écoulement (FD).

7. Une méthode de broyage humide selon la revendication 6, dans laquelle un autre réservoir d'alimentation (1) est utilisé pour alimenter un autre broyeur continu (2) autre que le premier broyeur continu (2) dans la direction d'écoulement (FD).

8. Une méthode de broyage humide selon la revendication 7, dans laquelle chaque broyeur continu (2) est alimenté par un réservoir d'alimentation (1).

9. Une méthode de broyage humide selon la revendication 8, dans laquelle des matériaux solides ayant des degrés de dureté différents sont fournis au système à partir de chaque réservoir d'alimentation (1).

10. Une méthode de broyage humide selon la revendication 6, dans laquelle un hydrocyclone (5) est utilisé pour sélectionner la taille de la matière broyée qui est connecté à la dernière sortie (2.b) du broyeur continu dans la direction d'écoulement (FD), où une extrémité est connectée pour alimenter n'importe lequel broyeur continu (2) et l'autre extrémité est connectée pour décharger le matériau broyé qui a été séparé/classé.

11. Une méthode de broyage humide selon la revendication 10, dans laquelle une unité de déshydratation (6), disposée en aval de ladite autre extrémité de l'hydrocyclone (5) pour séparer les matières solides de l'eau, où une extrémité est connectée pour réalimenter le réservoir d'alimentation en eau (4) avec l'eau qui a été récupérée et l'autre extrémité est connectée pour décharger le matériau broyé afin d'augmenter le taux de solides de la suspension dont la densité a été réduite pour effectuer une classification selon la taille dans l'hydrocyclone (5).

12. Une méthode de production de céramique comprenant les étapes suivantes:

broyage d'une solution aqueuse préparée avec une prescription céramique selon une méthode des revendications 6-11,
mise en forme du matériau broyé,
frittage du matériau mis en forme.

**FIGURE 1**

**FIGURE 1.A**

FIGURE 2

FIGURE 3

FIGURE 4

**FIGURE 5**

**FIGURE 6**

FIGURE 7

Kaoline A   Kaoline B   Granite A   Ground Brick   Feldspar A        Kaoline A   Kaoline B   GraniteA   Ground Brick   Feldspar A

FIGURE 8

Meter (μm)

FIGURE 9

FIGURE 9.A

**EP 3 768 431 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015059591 A1
- EP 1690598 A1
- EP 0298777 A2